# EUROPEAN PATENT SPECIFICATION

(11) **EP 2 961 201 B1**
(45) Date of publication and mention of the grant of the patent: **17.10.2018**
(21) Application number: 14306022.6
(22) Date of filing: 27.06.2014
(51) Int. Cl.: H04W 4/00, H04L 29/06, H04W 74/08, H04L 5/00, H04W 28/06

(54) **ON DEMAND OVERHEAD TRANSMISSION FOR MACHINE TYPE COMMUNICATION**
On-Demand-Overhead-Übertragung für Kommunikation vom Maschinentyp
Transmission aérienne à la demande pour communication de type machine

(43) Date of publication of application: 30.12.2015
(73) Proprietor: Alcatel Lucent, 91620 Nozay (FR)
(72) Inventor: Fonseca Dos Santos, Andre, 70435 Stuttgart (DE); Doetsch, Uwe, 70435 Stuttgart (DE); Braun, Volker, 70435 Stuttgart (DE); Saur, Stephan, 70435 Stuttgart (DE)
(74) Representative: Mooij, Maarten

(56) References cited:
- EP-A1- 2 536 173
- US-A1- 2014 177 534

## Description

### FIELD OF THE INVENTION

The present invention relates to a method for wireless communication in a cellular network and to respective devices.

### BACKGROUND OF THE INVENTION

This section introduces aspects that may be helpful in facilitating a better understanding of the invention. Accordingly, the statements of this section are to be read in this light and are not to be understood as admission about what is in the prior art.

In view of the "Internet of Things" (IoT) concept, a new paradigm for the wireless networks is to be developed. A huge amount of machines have to be connected to such networks. It is predicted that a factor of 10X to 100 X machines/sensors per user will be deployed by 2020. Several applications for such machines will require nation-wide coverage and easy access to the internet. Therefore, cellular networks concepts are to be developed to satisfy requirements of such Internet of Things scenarios. 3^{rd} Generation Partnership Project (3GPP) works on the extension of LTE, for example for supporting a machine transmission mode.

A simple extension of existing standards will not suffice to fulfill the requirements for Massive Machine Communications (MMC) in an Internet of Things scenario. A huge amount of machines connected to a network simultaneously is likely to generate tremendous overloads on the control channel and on the random access procedure.

In Massive Machine Communications applications, only a few bytes of information are transmitted from a device to a base station. The transmissions are often in irregular time intervals and on a random time basis. Since many machines are connected, an unjustifiable amount of overhead is generated due to the transmission of IDs, encryption data, etc. Such overhead limits the amount of active machines that can be supported at the same time by the network.

US-patent application publication 2014/0177534 describes a communication protocol that reduces overhead for small data transmissions from a wireless device to a base station over an uplink channel. The wireless device is preconfigured with a device identifier. The preconfigured device identifier is known to the base station and is associated with a static tunnel between the base station and a serving gateway. The wireless device transmits application data to the base station in a medium access control packet. When the base station receives the medium access control packet, it maps the application data to the tunnel associated with the preconfigured device identifier.

### SUMMARY OF THE INVENTION

It is an object of the invention to provide an improved method and devices for communication in a cellular system addressing the above mentioned drawbacks.

According to one embodiment, a method for transmitting data by a user equipment device as defined in claim 1 is proposed. In one embodiment, the user equipment device is a machine type device. The user equipment device has at least a transmission functionality. The user equipment device sends user data embedded in a minimum frame. The minimum frame, which is sent via a wireless link is composed of the user data itself and a minimum identifier. The minimum identifier corresponds to the overhead of the user data, needed for enabling communication in the machine type communication system. This has the advantage that overhead is reduced to what
is needed for a specific machine type communication scenario and a regular header including overhead data which is not needed for this machine time communication scenario is not sent.

According to one embodiment, the minimum identifier comprises an index of the application type. A base station in a machine type scenario does often not need exactly the origin of the data, e.g. by receiving information about the user ID, but does need to know the application type to use the data. Thus, the minimum identifier provides this basic information, to make the data useful for the receiving device, e.g. a base station and does not include e.g. the user ID and/or encryption data.

According to one embodiment, a signal requesting a full frame is received. The signal requesting a full frame is sent by the base station and is received by the user equipment. The base station may send such a request if the information provided in the minimum frame is not sufficient for the application. After having received the signal requesting a full frame, the user equipment sends additional information regarding the ID of the device. In one embodiment, the user equipment sends complete overhead data and corresponding user data in response to such a request.

According to one embodiment, the full frame comprises address data and user data. In one embodiment, the full frame comprises address data, the minimum identifier and user data.

According to one embodiment, the minimum identifier does not comprise address data. Address data is not needed for many applications in machine type communication and can thus preferably be omitted in the communication to make the communication more efficient.

According to one embodiment, the minimum identifier does not comprise encryption data. In machine type communication scenarios, e.g. surveillance applications, data do not have to be encrypted. Thus, encryption data can be omitted to make the communication more efficient.

According to one embodiment, the minimum identifier comprises vendor information of the device. Vendor information is required in many machine type communication scenarios in order to evaluate accuracy of the received data, etc. at the base station.

According to one embodiment, a method for receiving data by a machine application manager as defined in claim 8 is proposed. In one embodiment, the machine application manager is integrated in a base station, e.g. an eNodeB. In one embodiment, the machine application manager is a separate device. The machine application manager receives a minimum frame from a user equipment via the base station transceiver. The minimum frame is composed of a minimum identifier and user data. A step of determining if more information needs to be collected from the source of the received minimum frame is performed. More information is
required, e.g. if the minimum frame does not contain a distinct identification of the device of origin of the minimum frame or its position and such data is required by the application, or other required data is missing. If more information needs to be collected, a signal is sent for requesting retransmission in full transmission mode. Then, the information is received in a retransmission in a full frame containing user data and overhead data. In one embodiment, retransmission of the data received in the minimum frame is not requested but it is requested that future transmissions are performed in full frames, e.g. for a certain time or until the request is canceled.

According to one embodiment, the minimum identifier comprises an index of the application type. A base station in a machine type communication scenario does often not need exactly the origin of the data, e.g. by receiving information about the user ID (address data), but does need to know the application type to use the data. Thus, the minimum identifier provides this basic information, to make the data useful for the receiving device, e.g. a base station.

According to one embodiment, the full frame comprises address data and user data. In one embodiment, the full frame comprises address data, the minimum identifier and user data.

According to one embodiment, a transmission device, e.g. a user equipment, in a wireless transmission network is proposed. The transmission device comprises a transceiver unit for transmitting data. The transmission device is equipped to perform a transmission functionality by transmitting data embedded in a minimum frame. The minimum frame is composed of the user data itself and a minimum identifier. The minimum identifier corresponds to the overhead of user data needed for enabling transmission of the user data. This has the advantage that the overhead is reduced to what is needed for a specific machine type communication scenario and a regular header including overhead data which is not needed for this machine time communication scenario is not sent.

According to one embodiment, a Machine Application Manager is proposed for receiving user data in a minimum frame composed of a minimum identifier and user data. The Machine Application Manager is for determining if more information needs to be collected from the source of the received minimum frame. The Machine Application Manager is equipped to send a signal requesting full transmission mode if more information needs to be collected and for receiving user data in a full frame.

According to one embodiment, the Machine Application Manager is connected to at least one transmission device via wireless communication links established by at least one base station.

According to one embodiment, a base station in wireless communication network is proposed. The base station comprises a Machine Application Manager as described above.

Further advantageous features of the embodiments of the invention are defined and are described in the following detailed description.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: discloses a frame according to the art
- Fig. 2: discloses a minimum frame according to the invention
- Fig. 3: discloses a full frame according to the invention
- Fig. 4: discloses a wireless communication system
- Fig. 5: discloses a flow chart of the method according to the invention

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

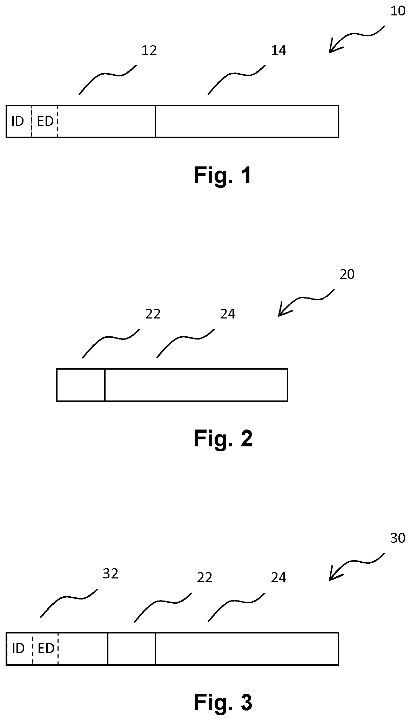

Fig. 1 discloses a frame 10 for data transmission e.g. in a wireless network and more general, in any protocol based data transmission network according to the art. The frame 10 comprises a header 12 and a user data area 14. In the header 12, data necessary for managing the communication are transmitted. These data are for example address data (ID), modulation and coding information, encryption data (ED), redundancy and error correction information, etc. In the user data area 14, user data are transmitted. The relation between the size of the header 12 and the user data area 14 determines the efficiency of the transmission and of the usage of radio resources. Especially in Machine to Machine communication, where small amount of user data is transmitted on a random basis, the relation between the size of user data area 14 and the size of the header 12 is disadvantageous, as always a frame 10 is needed to transmit few user data, leading to a poor usage of the radio resources.
Fig. 2 discloses a new frame structure according to the invention, a so called minimum frame 20. The minimum frame 20 comprises a user data area 24, in which user data e.g. in Machine to Machine communication is transmitted. The minimum frame 20 comprises a so called minimum identifier 22. The minimum identifier 22 serves as header of the minimum frame 20 and provides information necessary for data transmission, but comprises only reduced information compared to the header 12 according to the corresponding protocol as known in the art. The minimum identifier 22 comprises e.g. either one or multiple of an index of an application type and vendor information of the device. In one embodiment, the minimum identifier 22 does not comprise complete address data (ID). In one embodiment, the minimum identifier 22 does not comprise encryption data (ED). The ratio between the size of the user data area 24 and the size of the header is advantageous in the minimum frame 20. This is especially beneficial when only few data is transmitted. This is also beneficial if in a minimum frame 20 the user data area 24 is comparable small with regard to other frames, as these minimum frames 20 are dedicated to data transmission in Machine to Machine communication where only few data is transmitted at a time. The minimum frame 20 provides less overhead information than a full frame 10, but the rationale behind this is that not all overhead information provided in a communication protocol is really needed in Machine to Machine communication.
Fig. 3 discloses a full frame 30 according to the invention. A full frame 30 can be requested by the receiver, if it receives a minimum frame 20 and determines that complete overhead information in needed. The full frame 30 is e.g. composed of the user data area 24 of the minimum frame 20 and the minimum identifier 22 of the minimum frame 20. In addition, the full frame 30 comprises an additional header area 32, in which the header data not available in the minimum identifier 22 is provided. According to one embodiment, the structure of a full frame 30 is identical to a frame 10 as known in the art and as described in Fig. 1.

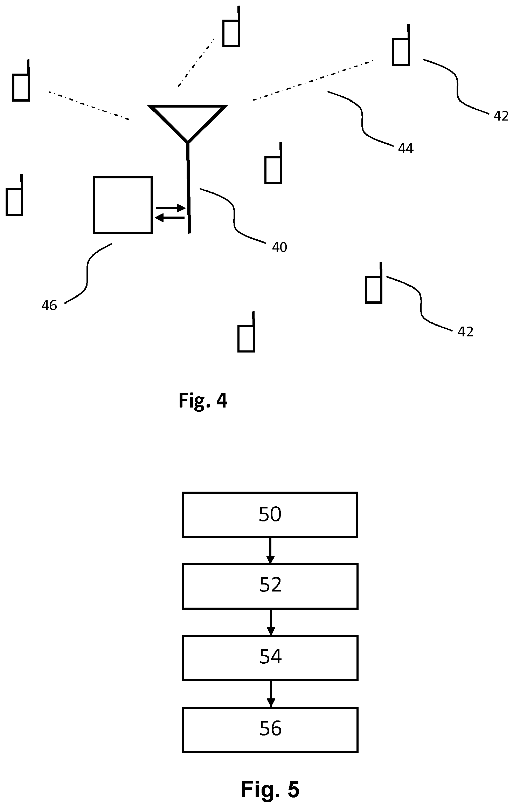

Fig. 4 shows a machine type communication scenario according to a preferred embodiment, comprising a first device, e.g. a base station 40 in a 4G wireless system or a 5G wireless system or any other wireless communication system, and associated sensor devices, e.g. user equipment devices 42. The term user equipment device 42 is to be understood to cover sensor devices in a sensor network, other known user equipment devices like mobile phones comprising sensors, which might transmit and receive data with or without the interaction of a human being and other fixed installed or mobile communication devices able to transmit and receive data. The user equipment devices 42 and the base station 40 are located within the communication range of these devices and communication is performed via a transmission channel 44, which is e.g. a wireless transmission channel. The user equipment devices 42 and the base station 40 perform communication by transmitting frames 20, 30 including header information and user data information as described above. In case of short data packets and sporadic transmissions, random access based access is used. In case the user equipment devices 42 are e.g. sensor devices, which perform e.g. temperature, light intensity or humidity measurements on a regular basis, sporadic data transfer with short data packets occurs. Other examples for such a scenario are sensor devices for determining fire, distributed e.g. in a forest to report potential fires or risk of fire according to a temperature. Such sensor devices are also referred to as user equipment devices 42 in the following. In such a scenario random access communication schemes may be used. The machine type communication scenario further comprises a Machine Application Manager 46, which is interconnected to one or more base stations 40 and manages evaluation if requests for full or extended overhead data are needed, which is described in more detail below. In one embodiment, the Machine Application Manager 46 is integrated into at least one base station 40, and manages evaluation if requests for full or extended overhead data are needed.
Fig. 5 discloses a flow chart of the method according to the invention. In a scenario according to Fig. 4, user equipment devices 42 send data, e.g. measurement data, to the base station 40. According to one embodiment, the complete overhead including address data (ID), encryption data (ED), etc. is only transmitted on demand, i.e. only if requested by the receiver, e.g. the base station 40. E.g. in monitoring applications such as temperature surveillance, temperature values are transmitted by the user equipment devices 42, e.g. sensing devices. In almost all cases it is assumed that the temperature values are in a normal range and are as expected and a lot of information available in the header 12 of a frame 10 according to the art is not needed. In fact, for such normal cases, only data about the application type is needed at the base station 40, in order to clarify which data is received. Only in exceptional cases, temperature values are out of the normal range and need further attention and are inspected in detail. Then it might be necessary to know the origin of the unexpected value and to establish further communication with the user equipment device 42 from which the unexpected value originates. In these cases, the information omitted if data is sent in a minimum frame 20 is needed at the base station 40.

To satisfy these requirements, in step 50, a user equipment 42 transmits a minimum frame 20 including the data to be transmitted in the user data area 24, e.g. a measurement value. In one embodiment, the data is transmitted using CDMA, i.e. data is spread by a code from a code pool (chosen in a random fashion). Further, the minimum frame 20 includes a minimum identifier 22 providing e.g. a short index to the application type and vendor. In one embodiment, where data is coded by using CDMA, the user data area 24 and the minimum identifier 22 are spread by a narrowband quasi-orthogonal code that is randomly chosen out of a standardized code pool. In step 52, the minimum frame 20 is received at the base station 40 and is provided to the Machine Application Manager 46. The Machine Application Manager 46 examines the data received in the minimum frame 20 based on the content itself and optionally on other information, e.g. the base station 40 location, application type, etc. In step 54, the Machine Application Manager 46 determines based on the information gathered from the minimum frame 20, if more information is needed. If this is not the case, the method stops here and waits for the next minimum frame 20 to be received. If more information is needed, e.g. if some abnormalities are discovered like a temperature which is out of the normal range, in step 54 the Machine Application Manager 46 instructs one or more base stations 40 to send a downlink massage in order to request data transmission in full frames 30. In one embodiment, this request is sent via broadcast by at least one base station 40. In one embodiment, a certain application class is requested by the broadcast to sent data in full frames 30, while other application classes still may use minimum frames 20 for data transmission. In step 56, the user equipments 42 providing data for the respective application class transmit or retransmit their data in full frames 30, along with complete overhead data including e.g. address data (ID). In one embodiment, only the address data (ID) now are retransmitted upon request of the Machine Application Manager, for example, with the same spreading code of the code pool used in the previous transmission 50 of the data in a minimum frame 20, in case this was transmitted via CDMA. With such information, e.g. the spreading code, the Machine Application Manager 46 identifies the origin of the previous data.

In one embodiment, it is assumed that an application does not require security, such as humidity or temperature readings. In this case, the data can be transmitted without encryption in a minimum frame 20 as described in step 50. Nevertheless, if either the network or the application layer realizes that many unexpected transmissions are received, the Machine Application Manager 46 instructs the base stations 40 to enhance security. In one embodiment, in step 54 the Machine Application Manager 46 instructs one or more base stations 40 to send a downlink massage in order to request data transmission in full frames 30. In one embodiment, this request is sent via broadcast by at least one base station 40. In one embodiment, a certain application class is requested by the broadcast to send data in full frames 30, while other application classes still may use minimum frames 20 for data transmission. In one embodiment, in step 54 the Machine Application Manager 46 instructs one or more base stations to request data to be sent in extended minimum frames which are encrypted, including encryption data (ED) but not including address data (ID). In step 56, the user equipments 42 providing data for the respective application class retransmit their data in full frames 30 (or extended minimum frames). Also if the above description is mainly focused on parts of the general overhead in wireless communication, i.e. the address data (ID) and encryption data (ED), according to one embodiment, the same principle apply to other data available in the header information of a frame 10 as known in the art. This is also applicable to information related to higher OSI Layers, e.g. IP address or session identifier.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for transmitting data by a device, within a machine type communication, the method comprising the steps of:
transmitting to a machine application manager user data in a minimum frame (20) composed of a minimum identifier (22) comprising information for data transmission and a user data area (24), the minimum frame not comprising address data containing a distinct identification of the device; determining by the application manager if more information needs to be collected from the device than the received minimum frame; and if a determination has been made that more information needs to be collected, receiving from the application manager a signal requesting full frame transmission mode; and
transmitting to the machine application manager additional information regarding address data of the device.

2. Method for transmitting data according to claim 1, wherein the minimum identifier (22) comprises an index of an application type.

3. Method for transmitting data according to claim 2 wherein the full frame (30) comprises address data, the minimum identifier (22) and user data.

4. Method for transmitting data according to one of claims 1 to 3, wherein the minimum identifier (22) does not comprise encryption data (ED).

5. Method for transmitting data according to one of claims 1 to 4, wherein the minimum identifier (22) further comprises vendor information of the device.

6. Method for receiving data by a machine application manager, within a machine type communication, the method comprising the steps:
receiving (52), from a device, user data in a minimum frame (20) composed of a minimum identifier (22) comprising information for data transmission and a user data area (24), the minimum frame not comprising address data containing a distinct identification of the device;
determining if more information needs to be collected from the device than the received minimum frame (20); and if a determination has been made that more information needs to be collected, transmitting to the device (54) a signal requesting full frame transmission mode, and receiving from the device additional information regarding address data of the device.

7. Method for receiving data according to claim 6, wherein the minimum identifier (22) comprises an index of an application type.

8. Method for receiving data according to claim 6 or 7 wherein the full frame (30) comprises address data (ID), the minimum identifier (22) and user data.

9. Transmission device in a wireless communication network, the transmission device comprising a transceiver unit configured to perform the method according to any one of claims 1-5.

10. Machine Application Manager comprising a transceiver unit configured to perform the method according to any one of claims 6-8.

11. Base station in a machine type wireless communication network, wherein the base station (40) comprises a Machine Application Manager (46) according to claim 10.

## Patentansprüche

1. Verfahren zur Übertragung von Daten durch eine Vorrichtung innerhalb einer Kommunikation vom Maschinentyp, wobei das Verfahren die Schritte umfasst:
Übertragen, zu einem Maschinen-Anwendungsmanager, von Benutzerdaten in einem minimalen Rahmen (20), der aus einer minimalen Kennung (22) besteht, die Informationen für eine Datenübertragung und einen Benutzerdatenbereich (24) umfasst, wobei der minimale Rahmen keine Adressdaten umfasst, die eine eindeutige Identifikation der Vorrichtung enthalten;
Bestimmen, durch den Anwendungsmanager, ob mehr Informationen von der Vorrichtung erfasst werden müssen, als der empfangene minimale Rahmen; und falls eine Bestimmung vorgenommen wurde, dass mehr Informationen erfasst werden müssen, Empfangen, von dem Anwendungsmanager, eines Signals, das einen Übertragungsmodus für vollständige Rahmen anfordert;
und
Übertragen, zu dem Maschinen-Anwendungsmanager, zusätzlicher Informationen im Hinblick auf Adressdaten der Vorrichtung.

2. Verfahren zur Übertragung von Daten nach Anspruch 1, wobei die minimale Kennung (22) einen Index eines Anwendungstyps umfasst.

3. Verfahren zur Übertragung von Daten nach Anspruch 2, wobei der vollständige Rahmen (30) Adressdaten, die minimale Kennung (22) und Benutzerdaten umfasst.

4. Verfahren zur Übertragung von Daten nach einem der Ansprüche 1 bis 3, wobei die minimale Kennung (22) keine Verschlüsselungsdaten (ED) umfasst.

5. Verfahren zur Übertragung von Daten nach einem der Ansprüche 1 bis 4, wobei die minimale Kennung (22) ferner Herstellerinformationen der Vorrichtung umfasst.

6. Verfahren zum Empfangen von Daten durch einen Maschinen-Anwendungsmanager innerhalb einer Kommunikation vom Maschinentyp, wobei das Verfahren die Schritte umfasst:
Empfangen (52), von einer Vorrichtung, von Benutzerdaten in einem minimalen Rahmen (20), der aus einer minimalen Kennung (22) besteht, die Informationen für eine Datenübertragung und einen Benutzerdatenbereich (24) umfasst, wobei der minimale Rahmen keine Adressdaten umfasst, die eine eindeutige Identifikation der Vorrichtung enthalten;
Bestimmen, ob mehr Informationen von der Vorrichtung erfasst werden müssen, als der empfangene minimale Rahmen (20); und
falls eine Bestimmung vorgenommen wurde, dass mehr Informationen erfasst werden müssen, Übertragen (54) eines Signals zu der Vorrichtung, das einen Übertragungsmodus für vollständige Rahmen anfordert, und
Empfangen, von der Vorrichtung, zusätzlicher Informationen im Hinblick auf Adressdaten der Vorrichtung.

7. Verfahren zum Empfangen von Daten nach Anspruch 6, wobei die minimale Kennung (22) einen Index eines Anwendungstyps umfasst.

8. Verfahren zum Empfangen von Daten nach Anspruch 6 oder 7, wobei der vollständige Rahmen (30) Adressdaten (ID), die minimale Kennung (22) und Benutzerdaten umfasst.

9. Übertragungsvorrichtung in einem drahtlosen Kommunikationsnetz, wobei die Übertragungsvorrichtung eine Sendeempfängereinheit umfasst, die dafür ausgelegt ist, das Verfahren nach einem der Ansprüche 1-5 auszuführen.

10. Maschinen-Anwendungsmanager, welcher eine Sendeempfängereinheit umfasst, die dafür ausgelegt ist, das Verfahren nach einem der Ansprüche 6-8 auszuführen.

11. Basisstation in einem drahtlosen Kommunikationsnetz vom Maschinentyp, wobei die Basisstation (40) einen Maschinen-Anwendungsmanager (46) nach Anspruch 10 umfasst.

## Revendications

1. Procédé d'émission de données par un dispositif dans une communication de type informatique, le procédé comprenant les étapes suivantes :
transmission à un gestionnaire d'application informatique de données d'utilisateur dans une trame minimale (20) composée d'un identifiant minimal (22) comprenant des informations pour la transmission de données et d'une zone de données d'utilisateur (24), la trame minimale ne comprenant pas de données d'adresse contenant une identification distincte du dispositif ;
détermination par le gestionnaire d'application du besoin de recueillir d'autres informations depuis le dispositif que la trame minimale reçue ; et s'il a été déterminé que d'autres informations ont besoin d'être recueillies,
réception depuis le gestionnaire d'application d'un signal demandant un mode d'émission en trame complète ; et
transmission au gestionnaire d'application informatique d'informations supplémentaires concernant les données d'adresse du dispositif.

2. Procédé d'émission de données selon la revendication 1, dans lequel l'identifiant minimal (22) comprend un indice d'un type d'application.

3. Procédé d'émission de données selon la revendication 2, dans lequel la trame complète (30) comprend les données d'adresse, l'identifiant minimal (22) et les données d'utilisateur.

4. Procédé d'émission de données selon l'une quelconque des revendications 1 à 3, dans lequel l'identifiant minimal (22) ne comprend pas de données de chiffrement (ED) .

5. Procédé d'émission de données selon l'une quelconque des revendications 1 à 4, dans lequel l'identifiant minimal (22) comprend en outre des informations sur le fournisseur du dispositif.

6. Procédé de réception de données par un gestionnaire d'application informatique dans une communication de type informatique, le procédé comprenant les étapes suivantes :
réception (52), depuis un dispositif, de données d'utilisateur dans une trame minimale (20) composée d'un identifiant minimal (22) comprenant des informations pour l'émission de données et d'une zone de données d'utilisateur (24), la trame minimale ne comprenant pas de données d'adresse contenant une identification distincte du dispositif ;
détermination du besoin de recueillir d'autres informations depuis le dispositif que la trame minimale (20) reçue ; et
s'il a été déterminé que d'autres informations ont besoin d'être recueillies, émission vers le dispositif (54) d'un signal demandant un mode de transmission en trame complète, et
réception depuis le dispositif d'informations supplémentaires concernant les données d'adresse du dispositif.

7. Procédé de réception de données selon la revendication 6, dans lequel l'identifiant minimal (22) comprend un indice d'un type d'application.

8. Procédé de réception de données selon la revendication 6 ou 7, dans lequel la trame complète (30) comprend des données d'adresse (ID), l'identifiant minimal (22) et les données d'utilisateur.

9. Dispositif d'émission dans un réseau de communication sans fil, le dispositif d'émission comprenant une unité d'émetteur-récepteur configurée pour exécuter le procédé selon l'une quelconque des revendications 1 à 5.

10. Gestionnaire d'application informatique comprenant une unité d'émetteur-récepteur configurée pour exécuter le procédé selon l'une quelconque des revendications 6 à 8.

11. Station de base dans un réseau de communication sans fil de type informatique, dans laquelle la station de base (40) comprend un gestionnaire d'application informatique (46) selon la revendication 10.
